Europäisches Patentamt

European Patent Office

Office européen des brevets

(19)

(11)  EP 0 607 354 B1

(12)  FASCICULE DE BREVET EUROPEEN

(45) Date de publication et mention
de la délivrance du brevet:
**20.03.1996  Bulletin 1996/12**

(21) Numéro de dépôt: **92922706.4**

(22) Date de dépôt: **09.10.1992**

(51) Int Cl.6: **H02K 33/16**, H02K 33/06

(86) Numéro de dépôt international:
**PCT/FR92/00940**

(87) Numéro de publication internationale:
**WO 93/07673 (15.04.1993 Gazette 1993/10)**

(54) **ACTIONNEUR ELECTROMAGNETIQUE A TROIS POLES POUR DISTRIBUTEURS PNEUMATIQUES**

DREI POLE AUFWEISENDES ELEKTROMAGNETISCHES BETÄTIGUNGSELEMENT FÜR PNEUMATISCHE VERTEILER

ELECTROMAGNETIC ACTUATOR WITH 3 POLES FOR PNEUMATIC DISTRIBUTORS

(84) Etats contractants désignés:
**CH DE FR GB IT LI**

(30) Priorité: **11.10.1991  FR 9112587**

(43) Date de publication de la demande:
**27.07.1994  Bulletin 1994/30**

(73) Titulaire: **MOVING MAGNET TECHNOLOGIES S.A.**
**F-25000 Besançon (FR)**

(72) Inventeurs:
• **OUDET, Claude**
 **F-25000 Besançon (FR)**

• **GANDEL, Pierre**
 **F-25660 Montfaucon (FR)**

(74) Mandataire: **Pernez, Helga**
**Breese Majerowicz,**
**Conseils en Propriété Industrielle,**
**CNIT World Trade Center 1,**
**BP 434**
**F-92053 Paris la Défense (FR)**

(56) Documents cités:
EP-A- 0 134 827
CH-A- 624 522
DE-B- 1 157 691
US-A- 5 013 223
WO-A-90/16109
DE-A- 3 246 064
FR-A- 2 031 901

## Description

La présente invention concerne un actionneur électromagnétique du type produisant une force due au courant sensiblement constante sur toute la course utile et présentant une force en l'absence de courant réduite, comportant une structure statorique composée de deux parties dont l'une au moins présente trois pôles statoriques, et un organe mobile en translation comportant deux paires de pôles correspondant à deux aimants minces aimantés en sens opposés, ainsi que la réalisation de distributeurs pneumatiques mettant en oeuvre de tels actionneurs.

De tels actionneurs réalisables en symétrie plane ou en symétrie axiale sont connus dans l'art antérieur, dans leur concept général.

En particulier, la demanderesse est titulaire du brevet WO-A-9016109 relatif à un actionneur électromagnétique monophasé de faible encombrement. Les actionneurs décrits dans ce brevet sont destinés en particulier à la commande des têtes de lecture et d'écriture d'un disque dur ou l'actionnement de plume de table traçante. Dans ces cas, on recherche une faible constante de temps électrique.

Pour des applications pour lesquelles une force élevée par puissance électrique appliquée à la bobine est recherchée, de tels actionneurs à trois pôles statoriques connus dans l'art antérieur présentent des inconvénients. En effet, lorsque la largeur des trois pôles du stator correspond à la course rotorique, l'espace disponible pour loger le fil de cuivre de la bobine électrique d'excitation peut s'avérer insuffisant.

On peut certes augmenter la largeur des pôles au delà de la dimension nécessaire pour la course rotorique attendue. Dans ce cas, il est également nécessaire d'augmenter la largeur des pôles rotoriques, ce qui conduit à un accroissement du prix de revient, car les matériaux magnétiques de qualité employés pour la réalisation d'aimants minces performants sont onéreux.

On a également proposé dans l'art antérieur de réaliser des actionneurs à plusieurs étages, présentant 2N+1 pôles statoriques et 2N paires de pôles rotoriques, ou 2N+1 paires de pôles rotoriques et 2N pôles statoriques. Toutefois, outre le coût élevé de tels actionneurs, on abouti à des encombrements importants.

L'objet de la présente invention est de remédier à ces inconvénients en proposant un actionneur électromagnétique selon la Revendication 1, celui-ci comportant trois pôles statoriques et deux paires de pôles rotoriques, propres à engendrer une force par puissance électrique appliquée importante, et d'un encombrement optimum. L'invention vise plus particulièrement un actionneur de type linéaire ou à géométrie axiale, comportant une structure statorique présentant deux parties statoriques. L'une des parties statoriques présente un pôle central dont la longueur $Y_C$ est supérieure ou égale à la course Y de l'organe rotorique augmentée d'une longueur sensiblement égale à la longueur E de l'entrefer.

La longueur $Y_L$ des pôles latéraux est déterminée uniquement par le volume nécessaire au logement de la bobine électrique d'excitation dont les caractéristiques sont calculées en fonction de la force par puissance électrique appliquée requise d'une part, et de l'épaisseur Z de ladite bobine d'autre part. La longueur $Y_L$ est supérieure à la longueur $Y_C$ du pôle statorique central.

Contrairement à l'enseignement du métier, l'actionneur à trois pôles selon l'invention, présente un pôle central et deux pôles latéraux de dimensions différentes. Ce mode de réalisation surprenant pour l'homme de métier, permet néanmoins de conserver des performances satisfaisantes, tout en permettant le logement d'une bobine correspondant à un grand volume de cuivre. Il permet également de limiter l'encombrement latéral de l'actionneur et de répondre ainsi aux contraintes imposées dans de nombreuses applications.

De préférence, le rapport entre l'épaisseur de la bobine, mesurée suivant le plan perpendiculaire à l'aimant mince et la longueur $Y_{cu}$ de la bobine, mesurée suivant l'axe de déplacement de l'organe mobile est inférieur ou égal à 1, et de préférence égal à 1. En d'autres termes, la bobine est plus longue que haute, et de préférence de section carrée. En effet, ce choix permet de limiter les fuites du champ magnétique à travers la bobine de cuivre.

Selon un mode de réalisation préféré permettant d'augmenter encore le volume de cuivre sans augmenter les cotes extérieures de l'actionneur, le pôle central se prolonge par un noyau de section inférieure à la section dudit pôle central. La section du noyau ainsi formé est déterminée de façon à permettre le passage du flux magnétique en régime nominal sans saturation du matériau le constituant.

L'actionneur selon l'invention peut être réalisé en symétrie plane ou en symétrie axiale. Dans ce dernier cas, la structure statorique ainsi que le rotor sont de type cylindrique. Le rotor est mobile en translation selon un axe Y correspondant à l'axe de courbure de la structure statorique cylindrique et du rotor.

Le rapport

$$\frac{D_b}{d_b}$$

est de préférence compris entre 1,2 et 2,1, où :

- $D_b$ désignant le diamètre extérieur des bobines ;
- $d_b$ désignant le diamètre intérieur des bobines.

Ce rapport est de préférence sensiblement égale à 1,65 et tout le moins compris entre 1,4 et 1,9. Ce rapport permet d'optimiser les pertes magnétiques se produisant dans la structure statorique.

Le pôle central est de préférence séparé des pôles latéraux d'une distance e supérieure ou égale à 0,5 E, où E désigne la largeur de l'entrefer.

Selon un mode de réalisation préféré, la deuxième partie statorique est mobile et solidaire du rotor. Ce mode de réalisation permet de réduire l'entrefer et donc d'augmenter le rendement de l'actionneur.

La deuxième partie statorique est de préférence constituée par une culasse en un matériau magnétique doux, non saturable en régime nominal, d'une longueur au plus égale à la longueur des pôles rotoriques. La section de cette culasse présente avantageusement une section trapézoïdale.

L'invention concerne également une vanne pneumatique constituée par un corps cylindrique présentant au moins une première sortie communiquant avec une première entrée lorsque l'organe mobile occupe une première position, la communication entre ladite première entrée et ladite première sortie étant interrompue lorsque ledit organe mobile occupe une seconde position.

Des modes de réalisation particuliers de la présente invention seront décrit dans ce qui suit, faisant référence aux dessins, où :

-    la figure 1 représente une vue en perspective d'un mode de réalisation d'un actionneur à symétrie plane dans lequel la deuxième partie statorique est fixe ;
-    la figure 2 représente un mode de réalisation d'un actionneur selon l'invention dans lequel la deuxième partie statorique est mobile avec les aimants permanents;
-    la figure 3 représente un mode de réalisation d'un actionneur selon l'invention, dont la partie mobile est suspendue sur des lames ressort ;
-    la figure 4 une vue en coupe transversale d'un actionneur à symétrie axiale comportant quatres bobines entourant chacune l'un des noyaux ;
-    la figure 5 représente une vue en coupe longitudinale d'une vanne pneumatique mettant en oeuvre un actionneur à symétrie axiale.

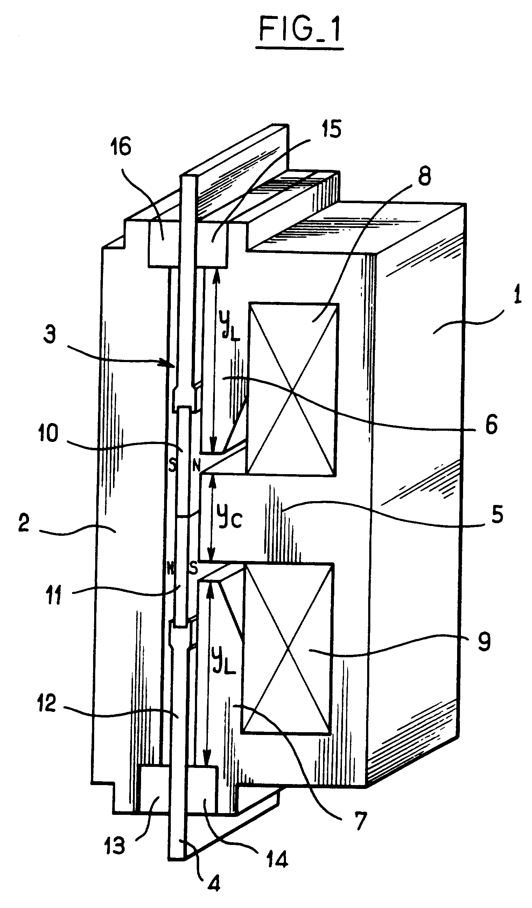

L'actionneur représenté en figure 1 est constitué par une structure statorique composée par une première partie statorique (1) et une deuxième partie statorique (2). Ces deux parties statoriques (1) et (2) définissent un entrefer (3) à l'intérieur duquel se déplace un organe mobile (4). La première partie statorique (1) présente trois pôles statoriques, à savoir un pôle statorique central (5) et deux pôles statoriques latéraux (6 et 7). La première partie statorique (1) présente par ailleurs deux cavités (8, 9) de sections transversales carrées dans lesquelles sont logés une bobine de fil de cuivre entourant le pied du pôle central (5). Cette bobine génère un champ magnétique se refermant à travers les deux pôles rotoriques (10, 11) et la deuxième partie statorique (2). Les deux pôles rotoriques (10, 11) sont constitués par deux aimants minces adjacents, aimantés transversalement en sens opposés. Le premier pôle rotorique (10) présente dans l'exemple décrit un pôle nord dirigé du côté de la première partie statorique (1) et un pôle sud dirigé vers la deuxième partie statorique (2). Le deuxième pôle rotorique (11) présente un pôle statorique sud orienté vers la première partie statorique (1) et un pôle statorique nord dirigé vers la deuxième partie statorique (2) .

Les aimants minces sont constitués par un matériau magnétique tel que du néodyme-fer-bore ou du samarium-cobalt.

Les deux pôles rotoriques (10, 11) sont montés dans un support (12) réalisé en un matériau non magnétique. Ce support est guidé par des coussins (13, 14, 15, 16) disposés à l'extrémité des parties statoriques (1) et (2).

La largeur $Y_C$ du pôle statorique central (5) correspond sensiblement à la course de l'organe mobile (4) augmentée d'une dimension E correspondant à la largeur de l'entrefer. Les deux pôles latéraux (6, 7) ont une longueur $Y_L$ déterminée par le volume de cuivre nécessaire pour atteindre la force par puissance électrique appliquée requise.

Pour l'exemple de réalisation représenté en figure 1, dans lequel la direction z est celle perpendiculaire au plan de la feuille, c'est-à-dire la direction perpendiculaire à l'axe Y de déplacement de l'organe mobile, contenu dans le plan dudit organe mobile. La force F est égale à 2.B.Z.n.i, où :

-    B désigne l'induction fournie par l'aimant dans l'entrefer. Cette valeur est constante en valeur absolue en l'absence de courant ;
-    Z désigne l'épaisseur du rotor suivant la direction z ;
-    n désigne le nombre de tours de fil de cuivre ;
-    i désigne l'intensité du courant appliqué à la bobine.

Si l'on exprime ni en fonction de la puissance appliquée $P_e$, la force F s'exprime comme

$$F = 2 \times B \times Z \times \sqrt{\frac{P_e}{R_0}}$$

ou, pour une puissance unitaire $P_e = 1$.

$$F1 = \frac{2 \times B \times Z}{\sqrt{R_0}} ,$$

où $R_0$ est un coefficient géométrique lié aux dimensions de la bobine.

Si l'on admet que le pôle central (5) du stator est strictement limité à la largeur $Y_C$ nécessaire pour engendrer une force constante sur la course imposée, on peut exprimer le coefficient $R_0$ en fonction de :

-    $Y_C$ désignant la largeur du pôle central (5) mesurée suivant l'axe Y ;
-    Z correspondant à l'épaisseur du pôle central (5) mesurée suivant la direction z ;
-    H représente la hauteur de la bobine suivant l'axe X perpendiculaire au plan des aimants ;
-    $Y_L$ représente la largeur des pôles latéaux mesurée selon l'axe Y parallèle à l'axe de liberté en translation de l'organe mobile ;
-    $Y_{cu}$ correspondant à l'épaisseur de cuivre;
-    η correspondant au coefficient de remplissage de la bobine ;

- ρ correspondant à la résistivité du cuivre.

On trouve

$$R_0 \simeq \rho \frac{2Y_c + 2Z + \pi Y_{cu}}{Y_{cu} H \eta},$$

soit $Z = \nu \times Y_L$,

$$R_0 \simeq \rho \frac{\frac{2 \times (1+\nu) \times Y_c}{Y_{cu} + \pi}}{H \times \eta}$$

Compte tenu des paramètres imposés $\rho, \nu$, $Y_c$, on peut réduire $R_0$, et donc augmenter F1 en agissant sur les paramètres $Y_{cu}$ et H. Le paramètre H correspondant à la hauteur de la bobine est souvent limité par l'encombrement maximum admissible. Pour augmenter la force par racine de watt, l'actionneur selon l'invention permet, en raison des pôles latéraux de dimensions supérieures aux dimensions du pôle central, d'augmenter la longueur de la bobine.

Dans l'exemple décrit, la largeur $Y_L$ des pôles latéraux (6 et 7) est deux fois supérieure à la largeur $Y_C$ du pôle central (5).

La deuxième partie statorique dans l'exemple de réalisation décrit en figure 1, est constituée par un volume parallélépipédique, réalisé en un matériau de haute perméabilité magnétique, dont les dimensions sont suffisantes pour permettre le passage de l'intégralité du flux magnétique traversant les aimants (10) et (11).

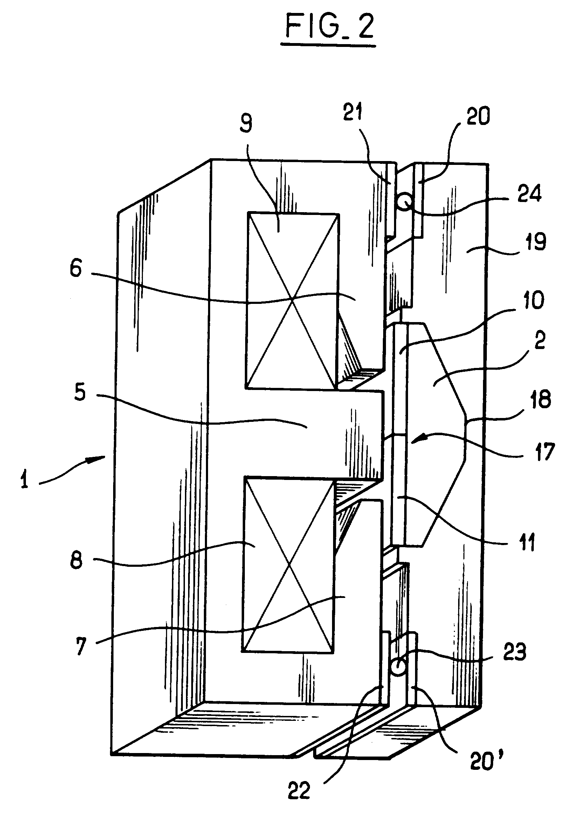

La figure 2 représente une variante de réalisation d'un actionneur à symétrie plane, dans laquelle la deuxième partie statorique (2) est solidaire des aimants permanents (10) et (11) adjacents.

La deuxième partie statorique (2) présente, en section, une forme trapézoïdale, la grande base (17) correspondant au plan de jonction avec les aimants (10) et (11) et la petite base (18) étant déterminée de façon à permettre un passage optimal des flux magnétiques, sans saturation dans ladite deuxième partie statorique (2), tout en diminuant le volume de matériau à haute perméabilité magnétique employé, et donc son poids et l'inertie de l'organe mobile. La deuxième partie statorique (2) est encapsulée dans un volume (19) réalisé par exemple en matière plastique, présentant à son extrémité des surfaces de glissement (20) et (20'). Ces surfaces de glissement correspondent à des surfaces complémentaires (21, 22) solidaires de la première partie statorique (1). Des roulements à billes ou à paliers lisses (23, 24) assurent la définition de l'entrefer et le guidage de l'organe mobile.

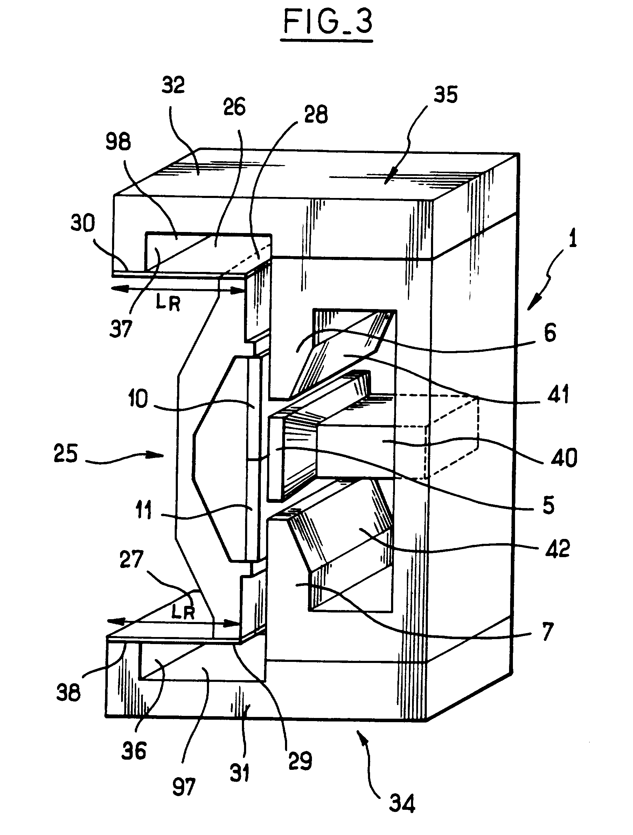

La figure 3 représente un troisième mode de réalisation d'un tel actionneur, dans lequel l'organe mobile (25) est positionné et guidé par l'intermédiaire de lames ressort (26, 27). L'organe mobile (25) est dans ce mode de réalisation monté de façon flottante sur les lames ressort (26, 27). L'organe mobile est du fait des aimants permanents (10, 11) naturellement attiré vers la première partie statorique. Pour définir un entrefer, il convient de maintenir l'organe mobile (25) à une faible distance de la surface des pôles statoriques (5 à 7), et ce pour toute la course utile. Cette fonction peut être assurée par une liaison déformable ou par une liaison élastique. Dans l'exemple décrit en référence à la figure 3, cette fonction est obtenue grâce à des lames ressort (26, 27) constituées par des feuilles minces réalisées en un matériau déformable élastiquement, s'étendant perpendiculairement au plan des aimants permanents (10, 11). Les lames ressort (26, 27) sont fixées à chaque extrémité de l'organe mobile (25) le long de bandes de raccordement (28, 29), et le long de bandes opposées (30, 38), à un prolongement (31, 32) de la première partie statorique (1). Les pièces de liaison (31, 32) présentent une partie respectivement (34, 35) s'étendant perpendiculairement au plan des aimants (10, 11), et donc parallèlement aux lames ressort (26 et 27).

Une deuxième partie (36, 37) s'étend perpendiculairement aux lames ressort (26, 27) et se termine par des surfaces (30, 38) de solidarisation des lames ressort (26, 27). La longueur des lames ressort (26, 27) est déterminée de façon à ce que la distance entre les surfaces des aimants (10, 11) en regard des surfaces des pôles statoriques (5, 6, 7) corresponde à la distance nécessaire pour définir l'entrefer requis.

La longueur $L_r$ des lames ressort (26, 27) peut être en outre déterminée de façon à être suffisante afin que les déplacements de l'organe mobile suivant un axe perpendiculaire au plan des aimants permanents (10, 11), soit négligeables pour la course de l'organe mobile (25).

La géométrie de l'entrefer peut être modifiée pour augmenter ou réduire la raideur magnétique et obtenir un effet similaire à celui obtenu en modifiant la raideur des ressorts de suspension, de façon à réduire les contraintes subies par les lames de ressort sans modifier la fréquence propre.

Lorsque la lame ressort est longue, les variations de l'entrefer entre l'extrémité de la course et la position centrale sont minimisées et se traduisent par une faible raideur magnétique. La fréquence propre de l'organe mobile est dans ce cas essentiellement déterminée par les caractéristiques des lames ressorts, et en particulier par leur raideur mécanique.

Au contraire, lorsque les lames ressort sont courtes, la distance entre la surface des aimants (10, 11) et les surfaces polaires de la première partie statorique varie sensiblement entre la position centrale et la position dans laquelle l'organe mobile est en fin de course. Cette variation de l'entrefer se traduit par une phénomène de force en l'absence de courant tendant à faire revenir l'organe mobile au repos en position centrée. La fréquence propre de l'organe mobile (25) est donc sensiblement modifiée par la raideur magnétique ainsi obtenue.

Dans l'exemple de réalisation représenté en figure 3, les flancs latéraux de la première partie statorique (1) perpendiculaires à l'axe Y de déplacement de l'organe mobile (25) sont solidaires chacuns de pièces (34, 35) réalisées en un matériau non magnétique, de forme sensiblement parallèlépipèdiques, présentant des évidements respectivement (97, 98). Ces évidements (97, 98) permettent les mouvements de l'organe mobile (25).

Afin de diminuer l'encombrement de la partie statorique supportant la bobine, le pôle central (5) est solidaire d'un noyau (40) de section transversale inférieure à la section transversale du noyau (5). La section transversale du noyau (40) est déterminée de façon à permettre le passage du flux magnétique avec un minimum de saturation. Cette réduction de diamètre permet de loger une bobine présentant un volume de cuivre supérieur à celui autorisé dans le cas d'un actionneur dans lequel la section du noyau est identique à la section du pôle central (5).

De la même façon, les pôles latéraux (6 et 7) présentent un chanfrein respectivement (41 et 42) permettant à la fois d'offrir une surface polaire latérale étendue et une masse de matériau de haute perméabilité magnétique suffisante pour faire passer la totalité du flux magnétique.

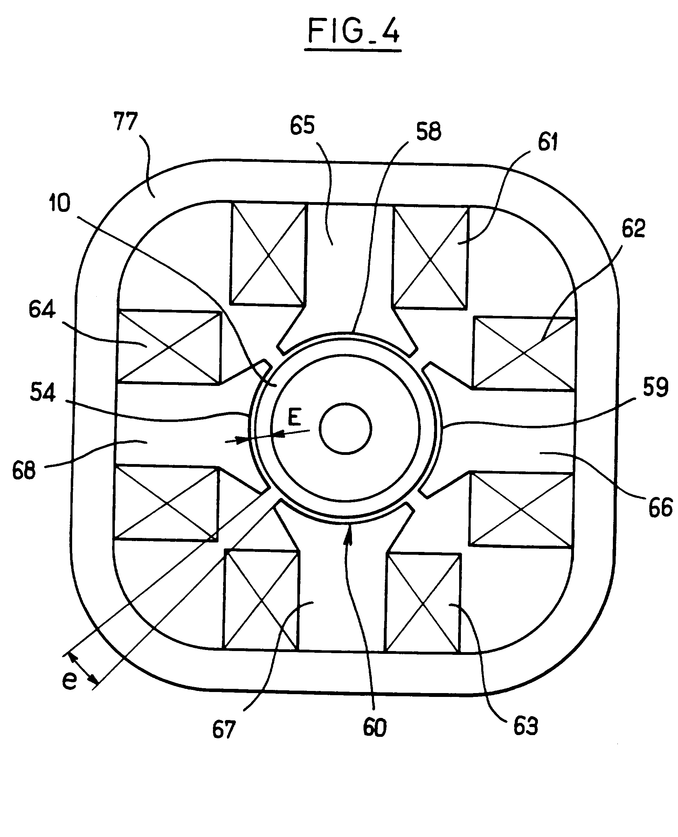

La figure 4 représente un actionneur à symétrie de révolution.

La première partie statorique est constituée par 4 pôles centraux (54, 58, 59, 60). Ces pôles centraux (54, 58, 59, 60) s'étendent sur une surface légèrement inférieure à un quart de cylindre. Ils sont séparés d'une distance e correspondant sensiblement à la moitié de l'entrefer E. Les bobines (61, 62, 63, 64) entourent les noyaux respectivement (65, 66, 67, 68) prolongeant les pôles statoriques respectivement (58, 59, 60, 54). Ces noyaux (65 à 68) s'étendent radialement selon des axes décalés de 90° consécutivement. La section de ces noyaux est inférieure aux dimensions des pôles centraux, de façon à permettre un bobinage d'un volume de cuivre supérieur.

Les pôles latéraux non visibles sur la figure 4 sont en forme de tuiles et présentent en coupe transversale des formes sensiblement identiques à celles des pôles centraux (58, 59, 60, 54). Leur longueur axiale mesurée $Y_L$ est supérieure à la longueur $Y_C$ des pôles centraux, de façon à permettre le positionnement de bobines (62 à 64) de grandes dimensions.

Les aimants (10, 11) sont constitués par des éléments tubulaires coaxiaux, aimantés radialement, en sens opposé.

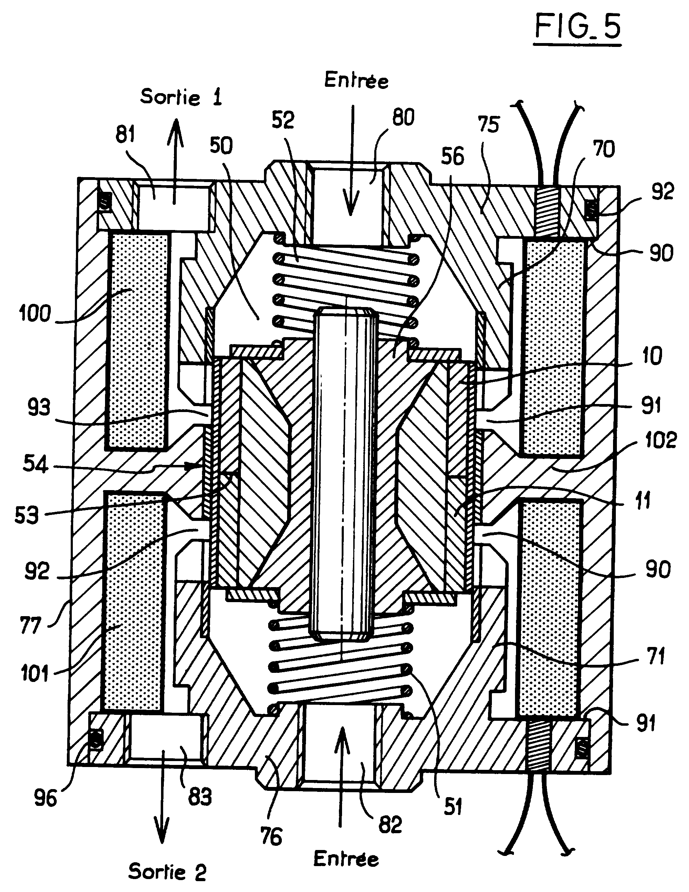

L'actionneur décrit en référence à la figure 5 correspond à une application pour la réalisation d'un distributeur pneumatique linéaire.

Il comporte une enveloppe extérieure (77) de forme cylindrique, réalisée en un matériau de haute perméabilité magnétique. Cette enveloppe extérieure (77) présente à sa partie médiane une partie annulaire intérieure (102) se terminant par le pôle statorique central (54).

L'enveloppe cylindrique extérieure (77) est fermée à chaque extrémité de façon étanche par des flasques (75, 76). L'enveloppe cylindrique (77) présente à cet effet à chaque extrémité un épaulement (90, 91) et un alésage annulaire dont le diamètre intérieur correspond au diamètre extérieur des flasques (75, 76). Des joints compressibles (92, 96) assurent l'étanchéité de la fermeture.

Le pôle latéral supérieur (70) de forme cylindrique est solidaire du flasque supérieur (75) disposé perpendiculairement à l'axe de symétrie. Le pôle latéral opposé (71) est également solidaire d'une flasque (76) fermant la partie opposée de l'enveloppe cylindrique (77).

Les bobines (100, 101) sont en forme de galettes ou d'anneaux. Leur axe de symétrie correspond à l'axe de symétrie de l'actionneur, et notamment de l'organe mobile. Elles sont enfilées dans l'enveloppe tubulaire (77) et positionnées entre la partie annulaire (102) terminée par le pôle central (54) et les flasques respectivement (75) et (76) solidaires des pôles latéraux cylindriques respectivement (70 et 71).

La partie mobile (50) est constituée par une pièce massive cylindrique mobile axialement dans l'espace cylindrique délimité par les pôles statoriques latéraux (70 et 71) et le pôle statorique central (54). Des ressorts (51, 52) assurent le positionnement de l'organe mobile (50) dans une position dans laquelle la jonction (53) entre les deux aimants annulaires (10 et 11) correspond au milieu du pôle central (54). Les aimants annulaires (10, 11) sont supportés par la deuxième partie statorique (55) constituée par une pièce annulaire en matériau de haute perméabilité magnétique, dont la section radiale est de forme trapézoïdale. Un moyeu central (56) complète l'organe mobile (50).

Dans l'exemple décrit, le guidage de l'organe mobile (50) est réalisé par paliers lisses. Les efforts d'attraction réciproque du stator et du rotor se compensent, et on n'a pas prévu d'annuler le degré de liberté en rotation autour de l'axe de symétrie.

Le calcul du coefficient $R_0$ des bobines (100, 101) devient un peu différent des cas précédents. Soit :

- $D_b$ le diamètre extérieur des bobines, peu inférieur au diamètre extérieur de l'actionneur, et en particulier au diamètre intérieur de l'enveloppe (77), donc imposé par l'encombrement maximum admis ;
- $d_b$ le diamètre intérieur des bobines (100, 101), nécessairement un peu supérieur au diamètre moyen de l'aimant (10, 11) $d_a$ ;
- $\lambda$ le rapport

$$\frac{D_b}{d_b}$$

- $\mu$ le rapport

$$\frac{d_b}{d_a}$$

On trouve :

$$F1 = \sqrt{\frac{2\pi\eta}{\rho}} \times B \times D_b \times \sqrt{H} \times \frac{\sqrt{\frac{\lambda-1}{\lambda+1}}}{\lambda \times \mu}$$

Le facteur $\mu$ peut être considéré en première approximation comme indépendant de $\lambda$. Pour un diamètre maximum $D_b$ fixé, il faut recherche quel est l'optimum du terme

$$\frac{\sqrt{\frac{\lambda-1}{\lambda+1}}}{\lambda}.$$

On trouve mathématiquement cet optimum à $\lambda \simeq 1,65$.

Pour $\lambda = 1,4$ ou $1,9$ on ne perd que $\simeq 2\%$, et pour $\lambda = 1,3$ ou $2,2$ on ne perd que $\simeq 7\%$. L'optimum n'est donc pas très pointu.

Pour les petites valeurs de $\lambda$ on travaille avec peu d'ampère-tours et un grand aimant, donc on peut attendre une bonne tenue de l'aimant à chaud.

Pour des grandes valeurs de $\lambda$ on travaille avec un aimant de petit diamètre présentant peu d'inertie, mais avec beaucoup d'ampère-tours pouvant présenter un risque de désaimantation à chaud. En pratique nous choisissons $1,3 < \lambda < 2$.

Avec peu d'erreur on peut donc prendre pour la fonction considérée la valeur 0,29 correspondant sensiblement à l'optimum de $\lambda$. Dans ces conditions et en remplaçant les autres constantes par leurs valeurs usuelles, c'est-à-dire :

$\rho = 1,72\text{E-8 } \Omega\text{m}$

$\eta \simeq 0,5$

$\mu \simeq 1,2$

On obtient pour la force par racine carrée de Watt $F1$ :

$$F1 \simeq 3266 \times B \times D_b \times \sqrt{H}$$

La longueur de l'encoche entre le pôle central (54) et les pôles latéraux (70, 71) est au moins égale à la moitié de l'entrefer E. On peut également créer une discontinuité entre le pôle central (54) et les pôles latéraux (70, 71) en aménageant une zone saturable. Cela perturbe la linéarité de la force en fonction du courant pour les valeurs de courant insuffisant pour saturer ladite zone, mais ce mode de réalisation reste acceptable dans certains cas. Il est également envisageable de remplir l'encoche par un matériau tel qu'un acier inoxydable non magnétique sous des pôles magnétiques, lorsque l'on souhaite rendre étanche le volume comportant l'aimant, par rapport au volume comportant la bobine, par exemple pour réaliser un système hydraulique.

A titre d'exemple, un actionneur conforme au mode de réalisation décrit ci-dessus, comporte un aimant fournissant une induction $B_r = 0,65$T. L'épaisseur de l'aimant tubulaire est de 1mm et le jeu radial de fonctionnement de 0,25mm. L'induction fournie par cet aimant correspond donc à 0,52T. Pour une puissance électrique fournie de 20 watts et un objectif de force de 100 newtons, sur une course de 4mm, on calcule :

$F1 = 22,4$ Newton par racine carrée de Watt et

$H \simeq 0,035$m, pour $D_b = 7\text{E-2}$m.

Le pôle central (54) ayant une longueur au moins égale à la course augmentée d'une fois l'entrefer total de 1,25mm, la dimension $Y_C = 5,25$mm. Dans ces conditions, la hauteur de bobine nécessaire conduit à des pôles latéraux de dimension $Y_L$ sensiblement supérieure aux dimensions du pôle $Y_C$ du pôle central. Pour obtenir les mêmes résultats avec un actionneur selon l'art antérieur, c'est-à-dire avec trois pôles de longueurs sensiblement égales au stator, on obtiendrait une bobine caractérisée par au plus $H = 0,003$m, ce qui engendrerait une bobine de diamètre extérieur $D_b=0,24$m. Le diamètre d'aimant $d_a$ ressortirait à 0,12m au lieu de de 0,035m dans le cas précédent. Il est donc clair que la solution proposée est sensiblement plus économique pour atteindre l'objectif de force recherché, tout en préservant les avantages d'absence de force sans courant, de constance de la force sur toute la course pour un courant donné, et de proportionnalité de la force au courant pour une position donnée.

Dans l'exemple d'application décrit, les flasques d'extrémité (75, 76) présentent des alésages correspondant à des entrées et sorties de fluide. Ces alésages communiquent avec un premier volume délimité par la cavité de la première partie statorique et la partie annulaire se prolongeant par le pôle statorique central pour l'un des alésages, et avec le volume délimité par l'un des pôles statorique latéral et l'organe mobile pour l'autre desdits alésages. Ces deux volumes communiquent par l'intermédiaire de l'espace (92, 93) séparant le pôle central (54) des pôles latéraux (70) ou (71).

L'organe mobile (50) permet de faire communiquer l'entrée de pression (80) avec la sortie de pression (81) lorsque l'organe mobile (50) se trouve en position basse. Lorsque l'organe mobile (50) se trouve en position haute, l'actionneur permet de faire communiquer l'entrée de pression (82) avec la sortie de pression (83). Dans cette application, les intervalles (90 à 93) correspondant au passage du fluide entre les orifices d'entrée et les cavités dans lesquelles sont logées les bobines d'une part et la cavité dans laquelle se meut l'organe mobile (50) d'autre part sont alternativement obturés ou dégagés par la surface extérieure de l'organe mobile (50).

L'invention peut être réalisée selon de nombreuses autres variantes. En partculier, dans la configuration à géométrie axiale, les aimants peuvent être réalisés en forme de tuile correspondant à un secteur cylindrique inférieur à 360 degrés.

Dans les structures cylindriques, il est possible de mettre en oeuvre deux bobines annulaires ou quatres bobines entourant chacun des noyaux ou épanouissements polaires, voire un nombre supérieur de bobines.

## Revendications

1.     Actionneur électromagnétique linéaire du type produisant une force due au courant sensiblement constante sur toute la course utile et présentant une force en l'absence de courant réduite, comportant une structure statorique réalisée en un matériau magnétique doux non saturable en régime nominal, comportant deux parties statoriques (1 et 2), l'une au moins des parties statoriques (1) présentant un pôle central (5) de largeur $Y_C$ et deux pôles latéraux (6, 7) de largeur $Y_L$, lesdites parties statoriques (1, 2) délimitant un entrefer E à l'intérieur duquel est disposé un organe rotorique mobile comportant deux paires de pôles de largeur $Y_R$ constituées par des aimants minces permanents (10 et 11) adjacents, aimantés transversalement, caractérisé en ce que la largeur $Y_C$ du pôle statorique central (5) est supérieure ou égale à la course Y de l'organe mobile rotorique augmentée d'une distance sensiblement égale à la largeur E de l'entrefer, la largeur $Y_L$ des pôles latéraux (6, 7) étant déterminée par le volume occupé par la bobine électrique d'excitation en fonction de la force par puissance électrique appliquée et de l'épaisseur Z de ladite bobine, l'épaisseur Z étant mesurée selon un axe perpendiculaire au plan des aimants minces (10, 11), la largeur $Y_L$ des pôles latéraux (6, 7) étant supérieure à la largeur $Y_C$ du pôle central (5) et en ce que l'épaisseur Z de ladite bobine est inférieure ou égale à sa longueur.

2. Actionneur électromagnétique selon la revendication 1, caractérisé en ce que la section du noyau central (40) supportant la bobine est inférieure à la section du pôle statorique central (5).

3. Actionneur électromagnétique selon la revendication 1 caractérisé en ce que la structure statorique (1), (2) et l'organe mobile (50) sont de type cylindrique, l'organe (50) étant mobile en translation selon un axe Y correspondant à l'axe de courbure de la structure statorique cylindrique et du rotor, le rapport

$$\frac{D_b}{d_b}$$

étant compris entre 1,2 et 2,1, où

- $D_b$ désigne le diamètre extérieur des bobines (100, 101) ;
- $d_b$ désigne le diamètre intérieur des bobines (100, 101).

4. Actionneur électromagnétique selon la revendication 3 caractérisé en ce que le rapport

$$\frac{D_b}{d_b}$$

est sensiblement égal à 1,65, de préférence compris entre 1,4 et 1,9.

5. Actionneur électromagnétique selon l'une quelconque des revendications précédentes caractérisé en ce que la distance e séparant le pôle central et chacun des pôles latéraux est supérieure ou égale à 0,5 E où E désigne la largeur de l'entrefer.

6. Actionneur électromagnétique selon l'une quelconque des revendications précédentes caractérisé en ce que la deuxième partie statorique est mobile et solidaire du rotor.

7. Actionneur électromagnétique selon la revendication 6 caractérisé en ce que le la deuxième partie statorique est constituée par une culasse en un matériau magnétique doux non saturable en régime nominal, d'une longueur au plus égale à la longueur des deux pôles rotoriques.

8. Actionneur électromagnétique selon la revendication 7 caractérisé en ce que le la deuxième partie statorique présente une section trapézoïdale, la grande base correspondant à la surface de jonction avec les aimants permanents.

9. Actionneur électromagnétique selon la revendication 1 caractérisé en ce que l'organe mobile comporte deux aimants minces (10, 11) aimantés en sens opposés ainsi qu'une deuxième partie statorique (2) de section trapèzoidale, la liaison entre l'organe mobile (25) et la première partie statorique étant assurée par deux lames élastiquement déformables s'étendant sensiblement perpendiculairement au plan des aimants minces (10, 11).

10. Actionneur électromagnétique selon la revendication 9 caractérisé en ce que les lames ressorts (26, 27) s'étendent perpendiculairement au plan des aimants minces (10, 11) depuis l'extrémité d'une partie (35) prolongeant la première partie statorique (1) perpendiculairement aux surfaces des pôles statoriques (5 à 7) et à l'axe de déplacement de l'organe mobile jusqu'aux extrémités latérales (28, 29) de l'organe mobile.

11. Vanne pneumatique caractérisée en ce qu'elle est constituée par un corps cylindrique (77) présentant au moins une première sortie (81) communiquant avec une première entrée (80) lorsque l'organe mobile (50) d'un actionneur conforme à l'une quelconque des revendications 5 à 10 occupe une première position, la communication entre ladite première entrée (80) et ladite première sortie (81) étant interrompue lorsque ledit organe mobile (50) occupe une seconde position.

**Claims**

1. A linear electromagnetic actuator of the type producing a substantially constant current-induced force along the useful travel and generating a reduced force when no current is flowing, including a statoric structure made from a mild magnetic material which is non-saturable when used in rated duty, comprising two statoric portions (1, 2), at least one of said statoric portions (1) comprising a central pole (5) having a width $Y_C$ and two side poles (6, 7) having a width $Y_L$, with said statoric portions (1, 2) delimiting an air gap E, on the inside of which a movable rotoric member is arranged which includes two pairs of poles having a width $Y_R$ and formed of thin adjacent, transversally magnetized, permanent magnets (10, 11), characterized in that said central statoric pole (5) width $Y_C$ is greater than or equal to travel Y of said rotoric movable member with the addition of a distance substantially equal to the width E of said air gap, with said side poles (6, 7) width $Y_L$ being determined by the exciting electric coil volume depending on the force per applied electric power and on thickness Z of said coil, said thickness Z being measured along an axis orthogonal with said thin magnets (10, 11) plane, said side poles (6, 7) width $Y_L$ being greater than said central pole (5) width and in that said coil thickness Z is lower than or equal to the length thereof.

2. The electromagnetic actuator of claim 1, characterized in that the cross-section area of coil-holding central core (40) is lower than that of said central statoric pole (5).

3. The electromagnetic actuator of claim 1, characterized in that said statoric structure (1), (2), and said movable member (50) are of the cylindrical type, with said member (50) being translationally movable along an axis Y corresponding to the axis of curvature of both cylindrical statoric structure and rotor, with the ratio

$$\frac{Db}{d_b}$$

being in the range from 1.2 to 2.1, wherein

- $D_b$ is the external diameter of said coils (100, 101),

- $d_b$ is the internal diameter of said coils (100, 101).

4. The electromagnetic actuator of claim 3, characterized in that said ratio

$$\frac{Db}{d_b}$$

is substantially equal to 1.65, preferably in the range from 1.4 to 1.9.

5. The electromagnetic actuator of any preceding claims, characterized in that distance e between said central pole and each of said side poles is greater than or equal to 0.5E wherein E is the air gap width.

6. The electromagnetic actuator of any preceding claims, characterized in that said second statoric portion is movable and integral with said rotor.

7. The electromagnetic actuator of claim 6, characterized in that said second statoric portion includes a yoke made from a mild magnetic material which is non-saturable when used in rated duty, having a length at the most equal to said rotoric pole length.

8. The electromagnetic actuator of claim 7, characterized in that said second statoric portion shows a trapezoidal cross-section, the long base of which corresponding to the joining surface of said permanent magnets.

9. The electromagnetic actuator of claim 1, characterized in that said movable member includes two opposed magnetized thin magnets (10, 11) as well as a second trapezoidal cross section statoric portion (2), with said movable member (25) and said first statoric portion being linked by two elastically deformable blades which extend substantially orthogonally with said thin magnets (10, 11) plane.

10. The electromagnetic actuator of claim 9, characterized in that said springy blades (26, 27) extend orthogonally with said thin magnets (10, 11) plane from the end of a portion (35) which extends said first statoric portion (1) orthogonally with said statoric pole (5-7) surfaces and with the displacement axis of said movable member to the side ends (28, 29) of said movable member.

11. A pneumatic valve, characterized in that it includes a cylindrical body (77) having at least a first outlet (81) which communicates with a first inlet (80) when the movable member (50) of an actuator as recited in any claim 5-10 stays in a first position, with the communication between said first inlet (80) and said first outlet (81) being interrupted when said movable member (50) stays in a second position.

**Patentansprüche**

1. Lineares elektromagnetisches Betätigungsgerät, das eine Kraft durch den Strom, der auf dem gesamten Betätigungsweg konstant ist, erzeugt und bei fehlendem Strom eine verringerte Kraft aufweist, bestehend aus einer Statorstruktur, die aus einem weichen magnetischen Material hergestellt ist, welches im Nominalbetrieb nicht sättigbar ist, bestehend aus zwei Statorteilen (1 und 2), wobei einer dieser Statorteile (1) einen Mittelpol (5) der Breite $Y_C$ und zwei Seitenpole (6, 7) der Breite $Y_L$ aufweist, wobei die Statorteile (1, 2) einen Luftspalt E begrenzen, in dem ein bewegliches Rotororgan angeordnet ist, bestehend aus zwei Polpaaren der Breite $Y_R$, die von kleinen aneinandergrenzenden Dauermagneten (10 und 11), die quer magnetisch sind, gebildet werden, dadurch gekennzeichnet, daß die Breite $Y_C$ des mittleren Statorpols (5) größer oder gleich dem Weg Y des beweglichen Rotororgans ist, vergrößert um einen Abstand, der im wesentlichen gleich der Breite E des Luftspalts ist, wobei die Breite $Y_L$ der Seitenpole (6, 7) von dem Volumen bestimmt wird, das die elektrische Erregerspule einnimmt, in Abhängigkeit von der aufgebrachten Kraft pro elektrischer Leistung und der Dicke Z der Spule, wobei die Dicke Z entlang einer Achse gemessen wird, die auf die Ebene der kleinen Magnete (10, 11) senkrecht steht, wobei die Breite $Y_L$ der Seitenpole (6, 7) größer als die Breite $Y_C$ des Mittelpols (5) ist, und daß die Dicke Z der Spule kleiner oder gleich ihrer Länge ist.

2. Elektromagnetisches Betätigungsgerät nach Anspruch 1, dadurch gekennzeichnet, daß der Querschnitt des Mittelkerns (40), der die Spule trägt, kleiner als der Querschnitt des mittleren Statorpols (5) ist.

3. Elektromagnetisches Betätigungsgerät nach Anspruch 1, dadurch gekennzeichnet, daß die Statorstruktur (1), (2) und das bewegliche Organ (50) zylindrisch sind, wobei das Organ (50) in Translation entlang einer Achse Y beweglich ist, die der Krümmungsachse der zylindrischen Statorstruktur und des Rotors entspricht, wobei das Verhältnis $D_b/d_b$ zwischen 1, 2 und 2,1 liegt, wobei

- $D_b$ den Außendurchmesser der Spulen (100, 101) bezeichnet;
- $d_b$ den Innendurchmesser der Spulen (100, 101) bezeichnet.

4. Elektromagnetisches Betätigungsgerät nach Anspruch 3, dadurch gekennzeichnet, daß das Verhältnis $D_b/d_b$ im wesentlichen gleich 1,65 ist und vorzugsweise zwischen 1,4 und 1,9 liegt.

5. Elektromagnetisches Betätigungsgerät nach einem der vorhergehenden Ansprüche, dadurch gekennzeichnet, daß der Abstand e zwischen dem Mittelpol und jedem der Seitenpole größer oder gleich 0,5 E ist, wobei E die Breite des Luftspalts bezeichnet.

6. Elektromagnetisches Betätigungsgerät nach einem der vorhergehenden Ansprüche, dadurch gekennzeichnet, daß der zweite Statorteil beweglich und mit dem Rotor verbunden ist.

7. Elektromagnetisches Betätigungsgerät nach Anspruch 6, dadurch gekennzeichnet, daß der zweite Statorteil von einem Magnetjoch aus einem weichen magnetischen Material gebildet wird, das im Nominalbetrieb nicht sättigbar ist, und eine Länge aufweist, die höchstens gleich der Länge der beiden Rotorpole ist.

8. Elektromagnetisches Betätigungsgerät nach Anspruch 7, dadurch gekennzeichnet, daß der zweite Statorteil einen Trapezquerschnitt aufweist, wobei die große Basis der Verbindungsfläche mit den Dauermagneten entspricht.

9. Elektromagnetisches Betätigungsgerät nach Anspruch 1, dadurch gekennzeichnet, daß das bewegliche Organ zwei kleine Magnete (10, 11), die in die entgegengesetzte Richtung magnetisch sind, sowie einen zweiten Statorteil (2) mit Trapezquerschnitt umfaßt, wobei die Verbindung zwischen dem beweglichen Organ (25) und dem ersten Statorteil durch zwei elastisch verformbare Blättchen gewährleistet wird, die im wesentlichen senkrecht auf die Ebene der kleinen Magnete (10, 11) verlaufen.

10. Elektromagnetisches Betätigungsgerät nach Anspruch 9, dadurch gekennzeichnet, daß die Federblättchen (26, 27) senkrecht auf die Ebene der kleinen Magnete (10, 11) ausgehend vom Ende eines Teils (35), der die Verlängerung des ersten Statorteils (1) senkrecht zu den Flächen der Statorpole (5 bis 7) und zur Verschiebeachse des beweglichen Organs darstellt, zu den seitlichen Enden (28, 29) des beweglichen Organs hin verlaufen.

11. Druckluftventil, dadurch gekennzeichnet, daß es aus einem zylindrischen Körper (77) besteht, der zumindest einen ersten Ausgang (81) aufweist, welcher mit einem ersten Eingang (80) in Verbindung steht, wenn das bewegliche Organ (50) eines Betätigungsgeräts, das einem der Ansprüche 5 bis 10 entspricht, eine erste Position einnimmt, während die Verbindung zwischen dem ersten Eingang (80) und dem ersten Ausgang (81) unterbrochen ist, wenn das bewegliche Organ (50) eine zweite Position einnimmt.

# FIG_1

# FIG. 2

# FIG_3

# FIG_4

FIG_5